# EUROPEAN PATENT APPLICATION

(11) **EP 4 428 096 A1**
(43) Date of publication of application: **11.09.2024**
(21) Application number: 23160906.6
(22) Date of filing: 09.03.2023
(51) Int. Cl.: C01B 3/38, C01B 3/48

(54) **PROCESS FOR PRODUCING HYDROGEN WITH ELECTRICALLY HEATED STEAM METHANE REFORMING**

(71) Applicant: L'AIR LIQUIDE, SOCIETE ANONYME POUR L'ETUDE ET L'EXPLOITATION DES PROCEDES GEORGES CLAUDE, 75007 Paris (FR)
(72) Inventor: Schmid-McGuinness, Teja, 60439 Frankfurt am Main (DE); Shrivastava, Swatantra Kumar, 60439 Frankfurt am Main (DE); David, Marion, 78350 Jouy-En-Josas (FR); Raulli, Elena, 60439 Frankfurt am Main (DE); Judas, Frederic, 75321 Paris (FR)
(74) Representative: Air Liquide

(57) **Abstract**

The invention relates to a process for producing hydrogen, comprising a steam methane reforming (SMR) step for producing synthesis gas, in which heat for the endothermic reaction is at least partially provided by converting electrical energy into heat. The synthesis gas is subject to a water-gas shift step and the shift product is subject to a chemical scrubbing step, to afford a carbon dioxide product stream and a hydrogen raw product stream. The hydrogen raw product stream is further purified by means of a hydrogen production step, which affords pure hydrogen and an off-gas stream. The off-gas stream, rich in carbon monoxide and methane, is recycled to the hydrocarbon containing feedstock stream, so that a combined stream of hydrocarbon containing feedstock, off-gas and steam is supplied to the steam methane reforming (SMR) step.

## Description

### Technical field

The invention relates to a process for producing hydrogen, comprising a steam methane reforming (SMR) step, wherein the heat for the endothermic reforming reaction is at least partially provided by converting electrical energy into heat.

### Background art

The global hydrogen output is estimated at 70 Mt per year, most of which is produced by the steam methane reforming (SMR) process, in which natural gas reacts with steam to yield hydrogen (H₂) and carbon monoxide (CO). This mixture, referred to as synthesis gas or syngas, is further converted by means of a water-gas shift unit to yield a shifted synthesis gas mixture consisting mainly of hydrogen and carbon dioxide (CO₂).

Steam methane reforming is a strongly endothermic process, which requires a significant amount of heat to be provided for the reforming reaction. In standard SMR units, this heat is provided by combustion of a hydrocarbon containing fuel, leading to a high carbon footprint for this process, with approximately 10 tonnes of direct carbon dioxide (CO₂) emissions for every tonne of hydrogen produced. It is estimated that the hydrogen production from SMR alone accounts for approximately 1.5 % of global carbon dioxide emissions.

Several setups have consequently been proposed to reduce the carbon footprint of hydrogen production through steam methane reforming, by capturing the carbon dioxide from various locations in the process. The location of the carbon dioxide capture is for instance the shifted synthesis gas, tail gas from a pressure swing adsorption unit, and flue gas. The process for capturing the carbon dioxide may involve chemical absorption, in particular an amine wash, adsorption (e.g. a CO₂ VPSA), cryogenic separation, or a membrane separation of the carbon dioxide to be captured.

The carbon dioxide in the shifted synthesis gas makes about 60 % of the total direct carbon dioxide emissions of the SMR process. This share can be captured with relative ease owing to the high concentration / partial pressure of carbon dioxide in the shifted synthesis gas. The current industry standard is to capture the carbon dioxide on the shifted synthesis gas with a chemical scrubbing, typically an amine wash, or with a cryogenic and membrane separation on the tail gas of a pressure swing adsorption (PSA) unit, after the hydrogen has been separated from the shifted synthesis gas by means of said PSA unit.

The remaining about 40 % of the carbon dioxide emissions are linked to the combustion of residual carbon monoxide (CO) and methane (CH₄) in the PSA tail gas and/or hydrocarbon-based fuel, to generate the heat required for the endothermic SMR reaction. With the recycle of PSA tail gas to the burners, the flue gas will contain all the direct carbon dioxide emissions of the SMR process. A capture rate of approximately 90 % can thus be achieved in the flue gas, albeit at a higher capture cost, owing to the low pressure of the flue gas, and the low partial pressure of carbon dioxide in the flue gas.

An alternative to a traditional SMR setup is to replace the firebox by an electrically heated reactor, and thus provide the required amount of heat for the reaction with electricity as the energy vector. In a SMR process, such a solution would obviate the combustion of additional hydrocarbon fuel, and the consequent formation of a low pressure flue gas in which carbon dioxide capture is difficult. Under the assumption that electricity from a renewable energy source is used, it should reduce the carbon footprint of the process, and facilitate carbon capture.

An electrically heated SMR thus raises the prospect of a reduced carbon footprint, more cost efficient carbon capture, as well as a more compact reformer design, since the reformer design is no longer limited by the constraint of transferring heat from the furnace to the reformer tubes, which imposes a large surface area for the heat exchange in a conventional reformer.

Various technologies have been proposed for electric heated reactors, each with their own challenges. In particular, four main concepts are under investigation for electric heated reforming (resistive heating, induction heating, electric field reforming, microwave reforming), which are described in further detail in the following.

### Resistive heating

According to this method, an external power generator induces an electric current to pass through the reactor following a conductive path. Heat is supplied to the SMR catalyst by dissipating power (Joule effect) through resistive media. The resistive medium can consist of the catalyst structure directly, or of other conductive heating elements (wire, pipe wall, conductive pellets). In literature, washcoated monoliths and other different structured catalysts have been studied for electrically heated steam or dry reforming, exploiting the conductivity of the structured material with respect to both heat and electricity when it is connected to a power source.

Another option is to fill the reactor with a mixture of catalyst pellets and electrically conductive particles able to drive an electric current through the packed bed. Otherwise, the most straightforward application of the electric heating method is employing a distribution of heating elements not shaped as the catalyst but still allowing the passage of electric current dissipating the required heat to the reactive zone.

The main advantage of such a system is the improved heat transfer efficiency and the prospect of a better control of the temperature along the catalyst bed. The issue related to the wall thermal resistance is then overcome, so that in principle a cold outer reactor surface can be obtained when a refractory layer is used to prevent dissipation of heat. Thanks to the internal heat supply a large external heat exchange surface area is no longer required to facilitate the heat transfer, so that much more compact solutions can be developed for the reactor configuration.

US 9,908,091 B1 discloses a furnace device for steam reforming of hydrocarbons (preferably methane) consisting of a combustion chamber hosting reactor tubes, burners, a voltage source and electrical conductors, so that the tubes can be heated both by the combustion of fuel in the burners, as well as by supplying electric current.

### Electro-reforming

Some scientific studies have demonstrated that when an electric field is applied to the catalyst bed of a reforming reactor, a conversion above thermal equilibrium is observed, thus raising the prospect of higher conversion rates at lower reforming temperatures.

The electric field essentially acts as a catalyst by lowering the activation energy of the reforming reaction, with the consequence that the reforming can be carried out at lower temperatures. The underlying principle is that the electric field induces proton hopping amongst the water particles adsorbed on the catalyst surface (according to the so-called Grotthuss mechanism), and enables the migration of the 0²⁻ (oxide) anions between the catalyst surface and the gas phase. Both of these phenomena reduce the surface potential of the catalyst and the activation barrier, boosting the reaction rate.

### Inductive heating

Some applications of this concept are described in the literature. The reactor configuration includes coils internally or externally installed, and incorporates a magnetic material, such as magnetic nanoparticles or thin films. When an alternating current runs through the coil, a magnetic field is formed around it, which in turn generates a Foucault current. Heat is generated as the power of this induced current is dissipated by Joule heating. In the presence of nanoparticle systems the heating mechanism occurs by magnetic hysteresis loss, while in the presence of macroscopic conducting material eddy currents are responsible for resistive heating.

There are claims that this technology could allow shortened start up periods and reduced energy losses due to a fast and more homogeneous heating response.

### Microwave heating

Initial investigations suggested that the use of microwaves to heat a dielectric material in catalytic reactions leads to conversion above thermal equilibrium. Later studies claimed, however, that this was entirely due to an uneven distribution of the electromagnetic field and local hot spots.

### Disclosure of the invention

In a steam methane reforming (SMR) process that aims to produce hydrogen, the reforming step is followed by a water-gas shift step, in which water and carbon monoxide react to form hydrogen and carbon dioxide. In a (final) purification step, most often in the form of a pressure swing adsorption (PSA) unit, the carbon dioxide, the unconverted methane and carbon monoxide, and any other components are separated from the hydrogen product. These other components form the PSA offgas, also known as PSA tail gas, which is desorbed from the PSA unit at low pressure.

In a conventional SMR unit, the PSA tail gas may account for up to 80 % of the total fuel required to generate the heat for the reforming reaction, with the remaining heat supplied in the form of a make-up fuel, generally a light hydrocarbon material such as natural gas. The combustion of this make-up fuel, which is avoided in an electrically heated SMR unit, thus only accounts for approximately 5 to 20 % of the direct carbon dioxide emissions on an SMR, and the question of the use of the PSA tail gas in an electrically heated SMR unit remains open.

The following table gives an example for the breakdown of carbon dioxide emissions (in kg emitted CO₂ per kg produced H₂) for conventional low steam export and high steam export SMR units. The data shown is based on simulation results.

| SMR process | Reaction | Heat generation | | **Total emissions** |
|---|---|---|---|---|
| | | Fuel | PSA off-gas | |
| low steam export (0.2 kg steam / Nm³ H₂) | 5.5 | 0.5 | 2.4 | **8.4** |
| high steam export (1.2 kg steam / Nm³ H₂) | 5.5 | 2.4 | 2.4 | **9.9** |

Although the heat transfer efficiency in a conventional SMR unit (firebox) is low, with roughly 50% of the heat transferred to the reformer tubes and promoting the reforming reaction, most of the residual heat in the flue gas is recovered, either by heating various streams in the process or by generating steam. The conventional SMR process is thus highly integrated, typically reaching an overall heat efficiency of 90 % or more.

In contrast, in an electrically heated SMR unit, only the heat available in the synthesis gas can be used for internal process heat integration, and it is thus challenging for an electrically heated SMR to close the heat balance of the overall process without considering additional heat sources or the combustion of at least a portion of an off-gas, which would have an adverse impact on the carbon dioxide emissions reduction.

It can be considered to burn the carbon monoxide and methane containing PSA off-gas (tail gas) generated in an electrically heated SMR unit to close the heat balance, by generating steam required for the reforming process, and by producing steam which can be exported or fed to a turbine to generate part of the electricity requirement of the process. However, by this concept only very small improvements in natural gas consumption and direct carbon dioxide emissions compared to conventional SMR are obtained, which is shown based on simulation data in the following table. The electrically heated SMR is referred to as "e-SMR".

| | SMR (conventional, no carbon capture) **comparative example 1** | e-SMR (no carbon capture) **comparative example 2** |
|---|---|---|
| Natural gas consumption (Nm³/Nm³ H₂) | 0.396 | 0.348 |
| Direct CO₂ emissions (kg/Nm³ H₂) | 0.841 | 0.738 |
| Electrical power (kWh/Nm³ H₂) | 0.027 | 0.965 |
| Indirect CO₂ emissions¹ EU 27 basis (kgCO₂eq/Nm³ H₂) | 0.007 | 0.253 |
| Total CO₂ emissions (direct + indirect EU 27 basis) (kg/Nm3H2) | 0.848 | 0.991 |
| Total natural gas LHV² + electric energy input (kWh/Nm³ H₂) | 4.138 | 4.578 |

| | | |
|---|---|---|
| ¹Carbon intensity of electricity: 262 gCO₂eq/kWh in EU27 in 2021 ²LHV (lower heating value) of Natural Gas: 46.5 MJ/kg | | |

Hence, although emissions linked to the combustion of the make-up fuel have been avoided, the make-up fuel only accounted for a small portion of the direct carbon dioxide emissions, and the overall emissions of the SMR process are not reduced significantly. Considering indirect emissions linked to the generation of the electric power, taking the EU 27 average of 2021, one finds that the total direct & indirect emissions have in fact increased. Similarly the total energy input into the system, whether in the form of the LHV of Natural Gas or as electric energy, has also increased relative to the reference conventional SMR.

Considering that the economics of hydrogen production are heavily driven by the operational expenditures (OPEX), it becomes clear from the above that even a relatively low cost of renewable electricity alone cannot justify an electrically heated SMR setup at current energy prices.

In the context of carbon pricing, in which governments implement a carbon tax for instance, an electrically heated SMR concept with carbon capture becomes more compelling. However, there is still the challenge for such a concept that a stream containing unconverted carbon monoxide and methane will be produced by the process, for which a use must be found, which will not penalize the economics of the solution while avoiding contributing to the carbon dioxide emissions of the process.

An electrically heated SMR process with carbon capture, in which the carbon dioxide is captured by means of a cryogenic process on the PSA tail gas, and where the remaining PSA off-gas (which is rich in carbon monoxide and methane) is combusted to generate electricity for the electrical heated reformer, does not yield a significant improvement over a conventional SMR process in which the carbon dioxide is captured by means of a cryogenic process on the PSA tail gas, and in which the remaining PSA off-gas (which is rich in carbon monoxide and methane) is combusted to generate part of the heat required for the reforming reaction. This is shown in the table below, where the data is based on simulation results. The electrically heated SMR is referred to as "e-SMR".

| | SMR (conventional, with carbon capture) **comparative example 3** | e-SMR (with carbon capture) **comparative example 4** |
|---|---|---|
| Natural gas consumption (Nm³/Nm³ H₂) | 0.383 | 0.335 |
| Direct CO₂ emissions (kg/Nm³ H₂) | 0.370 | 0.250 |
| Electrical power (kWh/Nm³ H₂) | 0.152 | 0.862 |
| Indirect CO₂ emissions¹ EU 27 basis (kgCO₂eq/Nm³ H₂) | 0.040 | 0.226 |
| Total CO₂ emissions (direct + indirect EU 27 basis) (kg/Nm³ H₂) | 0.410 | 0.476 |
| Total NG LHV² + electric energy input (kWh/Nm³H₂) | 4.128 | 4.340 |

| | | |
|---|---|---|
| ¹Carbon intensity of electricity: 262 gCO₂eq/kWh in EU27 in 2021 ²LHV (lower heating value) of Natural Gas: 46.5 MJ/kg | | |

It can be assumed that the same is true for comparable processes with an amine wash as the carbon capture method.

Although the emissions linked to the combustion of make-up fuel have been avoided in comparative example 4, the combustion of the carbon monoxide and methane containing off-gas once again yields a flue gas in which carbon capture is difficult and costly, with the consequence that the direct carbon dioxide emissions are not reduced significantly. Here again, the emissions linked to the generation of electric power may lead to an increase in total direct & indirect emissions relative to a conventional SMR, and the total energy input exceeds that of the conventional SMR.

It is one general object of the present invention to propose a process which overcomes the aforementioned drawbacks.

It is one further object of the present invention to propose a process with a lower amount of direct and/or indirect carbon dioxide emissions.

It is one further object of the present invention to propose a process with a lower consumption of hydrocarbon containing feedstock and/or fuel.

A contribution to the at least partial solution of at least one of the above mentioned objects is provided by the subject-matter of the independent claims. The dependent claims provide preferred embodiments which contribute to the at least partial solution of at least one of the objects. Preferred embodiments of elements of a category according to the invention shall, if applicable, also be preferred for components of same or corresponding elements of a respective other category according to the invention.

The terms "having", "comprising" or "containing" etc. do not exclude the possibility that further elements, ingredients etc. may be comprised. The indefinite article "a" or "an" does not exclude that a plurality may be present.

In general, at least one of the underlying problems is at least partially solved by a process for producing hydrogen, the process comprising
a) a steam methane reforming (SMR) step, to obtain a synthesis gas stream comprising hydrogen, carbon monoxide and carbon dioxide, by means of an endothermic reaction of a hydrocarbon containing feedstock stream and steam, wherein the heat for the endothermic reaction is at least partially provided by converting electrical energy into heat;
b) a water-gas shift step, comprising the conversion of carbon monoxide of the synthesis gas stream and steam to hydrogen and carbon dioxide, to obtain a shifted synthesis gas stream;
c) a chemical scrubbing step, comprising the absorption of carbon dioxide in a chemical scrubbing agent, and the desorption of the carbon dioxide from the chemical scrubbing agent, to obtain a carbon dioxide product stream and a hydrogen raw product stream, wherein the hydrogen raw product stream comprises hydrogen, carbon monoxide and methane;
d) a hydrogen production step, comprising separating hydrogen from the hydrogen raw product stream, to obtain a hydrogen product stream and an off-gas stream, wherein the off-gas stream is rich in carbon monoxide and methane; and
e) recycling at least a portion of the off-gas stream obtained in the hydrogen production step to the hydrocarbon containing feedstock stream, so that a combined stream of hydrocarbon containing feedstock, off-gas and steam is supplied to the steam methane reforming (SMR) step.

In the steam methane reforming (SMR) step a), the heat for the endothermic reaction is at least partially provided by converting electrical energy into heat. Hence, the steam methane reforming according to step a) may also be referred to as electrically heated steam methane reforming, abbreviated e-SMR. According to one embodiment, the electrical energy is from an electrical energy source, preferably a source of renewable electrical energy. According to one embodiment, the electrical energy is an electrical current.

According to one embodiment, the entire heat required for the endothermic reaction is provided by converting electrical energy into heat.

According to one embodiment, the hydrocarbon containing feedstock stream is a natural gas stream.

According to one embodiment, a pre-reforming step precedes the steam methane reforming (SMR) step. In the pre-reforming step, higher hydrocarbons (C2 and higher) are converted with steam to methane (CH₄).

According to one embodiment, a hydrodesulfurization step precedes the steam methane reforming (SMR) step, preferably precedes the pre-reforming step. In the hydrodesulfurization step, sulphur compounds which may act as SMR catalyst poison are removed from the hydrocarbon containing feedstock stream.

In the water-gas shift step b), the carbon monoxide (CO) in the synthesis gas stream obtained in step a) is converted with water (steam) in the well-known water-gas shift reaction to hydrogen and carbon dioxide.

According to one embodiment, the water-gas shift step is followed by a cooling step and a separation step, to separate process water as process condensate from the shifted synthesis gas stream.

According to step c), carbon dioxide is removed from the shifted synthesis gas stream, which contains hydrogen, carbon dioxide and carbon monoxide not converted in the waster-gas shift step b). The carbon dioxide is removed from the shifted synthesis gas stream by means of a chemical scrubbing step, which comprises the absorption of carbon dioxide in a chemical scrubbing agent, which affords a rich chemical scrubbing agent laden with carbon dioxide. The chemical scrubbing step comprises the subsequent desorption of carbon dioxide from the laden chemical scrubbing agent to afford a lean chemical scrubbing agent.

In the chemical scrubbing step, the carbon dioxide is absorbed from the chemical scrubbing agent by means of an chemical interaction, in particular an acid-base interaction. The carbon dioxide to be absorbed may be referred to as an acid gas. Further acid gases present in the shifted synthesis gas stream may be absorbed by the chemical scrubbing agent.

According to one embodiment, the chemical scrubbing step comprises absorption of carbon dioxide in the chemical scrubbing agent by means of an absorption column, in which the shifted synthesis gas stream and the chemical scrubbing agent flow in countercurrent. The shifted synthesis gas depleted in carbon dioxide is discharged from the absorption column as the hydrogen raw product stream. The hydrogen raw product stream comprises hydrogen as the main component, and further comprises carbon monoxide and methane. Subsequently, the carbon dioxide is desorbed from the rich chemical scrubbing agent by means of a regeneration column to afford a lean chemical scrubbing agent. The desorption may be effected by heating the laden chemical scrubbing agent, in particular by means of a reboiler. The carbon dioxide desorbed in the regeneration column is discharged from said regeneration column as the carbon dioxide product stream. The carbon dioxide product stream may be subject to further purification, and may be compressed and sequestrated (carbon capture and storage, CCS), or further used (carbon capture and utilisation, CCU).

According to one embodiment, the carbon dioxide product stream contains at least 90 % carbon dioxide per volume, preferably at least 95 % per volume, more preferred at least 99 % per volume.

According to one embodiment, the chemical scrubbing agent is an aqueous solution of an alkylamine, in the following referred to as "amine solution". The amine of the amine solution may be selected from the group of monoethanolamine (MEA), diethanolamine (DEA), methyldiethanolamine (MDEA), diisopropanolamine (DIPA) and diglycolamine (DGA). Also a combination of the aforementioned alkylamines may be utilised for the amine solution. Preferably, the amine solution comprises piperazine activated methyldiethanolamine, also referred to as activated methyldiethanolamine (aMDEA).

According to step d), hydrogen is produced from the hydrogen raw product stream by separating hydrogen from the hydrogen raw product stream. According to one preferred embodiment, the hydrogen production step comprises a pressure swing adsorption (PSA) step. That is, the hydrogen is separated from the hydrogen raw product stream by means of a pressure swing adsorption (PSA) unit. According to an alternative embodiment, the hydrogen is separated from the hydrogen raw product stream by means of a membrane unit. In the hydrogen production step, an off-gas stream is produced along with the (pure) hydrogen product stream. The off-gas stream contains carbon monoxide, methane, and, if applicable, residual amounts of hydrogen not separated from the hydrogen raw product stream.

According to one embodiment, the hydrogen product stream contains at least 90 % hydrogen per volume, preferably at least 95 % per volume, more preferred at least 99 % per volume.

The off-gas stream contains hydrogen, carbon monoxide and methane, in particular the off-gas stream is rich in hydrogen, carbon monoxide and methane. According to one embodiment, the off-gas stream contains at least 50 % hydrogen, carbon monoxide and methane per volume, preferably at least 70 % per volume, more preferred at least 90 % per volume.

According to step e), at least a portion of the off-gas stream, which is obtained in the hydrogen production step d), is recycled to the hydrocarbon containing feedstock stream. That is, a combined stream of hydrocarbon containing feedstock, off-gas and steam will be supplied to the steam methane reforming (SMR) step a) and is subject to the endothermic steam methane reforming reaction. According to one embodiment, said combined stream will contain at least the hydrocarbons contained in the feedstock stream, carbon monoxide and methane contained in the off-gas stream, and steam. According to one embodiment, the off-gas stream is recycled to an unconverted hydrocarbon containing feedstock stream. According to one embodiment, the off-gas stream is recycled to a desulfurized hydrocarbon containing feedstock stream. According to one further embodiment, the off-gas stream is recycled to a desulfurized and pre-reformed hydrocarbon containing feedstock stream. According to one further embodiment, the off-gas stream obtained in the hydrogen production step is recycled completely to the hydrocarbon containing feedstock stream.

It was found that according to the process of the invention, consumption of hydrocarbon containing feedstock, in particular natural gas, will be significantly lower in comparison to the process according to comparative example 4. Furthermore, carbon dioxide emissions will be significantly lower.

According to one embodiment of the process, a portion of the off-gas stream is routed to a combustion device, in particular a fired heater, wherein the combustion device is configured to generate heat.

According to this embodiment, a partial stream of the off-gas stream obtained in step d) is routed to a combustion device, in particular a fired heater. The combustion device produces heat by means of combustion of combustible compounds contained in the off-gas stream, in particular carbon monoxide and methane, and an oxygen source. The heat generated by the combustion device may be used for closing the heat balance of the process.

According to one embodiment, the portion of the off-gas stream in the total off-gas stream is 30 % to 50 % by volume, preferably 35 % to 45 % by volume.

Hence, preferably 30 % to 50 % by volume, preferably 35 % to 45 % by volume of the total off-gas stream will be routed to the combustion device.

According to one embodiment, the heat generated by the combustion device is used to close the heat balance of the process, which comprises at least one element from
- pre-heating the hydrocarbon containing feedstock stream before it enters the steam methane reforming (SMR) step,
- providing heat for the endothermic reaction in the steam methane reforming (SMR) step,
- pre-heating boiler feed water for the generation of steam,
- generating process steam for the steam methane reforming (SMR) step or the water-gas shift step, and
- super-heating steam generated in the process.

"Closing the heat balance of the process" means in particular, that the heat generated by the combustion device is used to improve the heat integration of the process. That is, preferably no external heat source or a minimum of external heat is utilized to fulfil the internal heat requirements of the process. Hence, the heat generated by the combustion device may be used for pre-heating the hydrocarbon containing feedstock stream before it enters the steam methane reforming (SMR) step, providing heat for the endothermic reaction in the steam methane reforming (SMR) step, pre-heating boiler feed water for the generation of steam, generating process steam for the steam methane reforming (SMR) step or the water-gas shift step, super-heating steam generated in the process, or a combination of the aforementioned. Thereby, the aforementioned list is not intended to be exhaustive.

According to one embodiment, the heat generated by the combustion device is indirectly utilised for the desorption of carbon dioxide from the chemical scrubbing agent.

That is, the heat generated by the combustion device may be utilised, for instance, to generate steam, or to heat up the hydrocarbon containing feedstock stream, the synthesis gas stream, or the shifted synthesis gas stream. One of those streams may be used for indirectly heating the carbon dioxide laden chemical scrubbing agent to effect the desorption of carbon dioxide from the laden scrubbing agent. The indirect heating may occur in a heat exchanger, for instance in a reboiler.

According to one embodiment, the converting of electrical energy into heat comprises at least one element from
- resistive heating,
- electro-reforming,
- inductive heating, and
- microwave heating.

Details of those methods were discussed before. The conversion of electrical energy or electrical power into heat may be realized by one or a combination of the aforementioned methods.

In general, the generation of the heat required for the endothermic reaction need not be limited to the conversion of electrical energy into heat. Rather, the electrically generated heat can be supplemented by the supply of heat by conventionally generated heat, for example by combustion.

According to one embodiment, the hydrocarbon of the hydrocarbon containing feedstock stream is natural gas, and a molar ratio of natural gas consumed to hydrogen produced is 0.33 or less, preferably 0.29 or less.

One technical effect of the process according to the invention is reducing the amount of natural gas consumed throughout the process relative to a reference amount of hydrogen produced (for example, 1 Nm³ of hydrogen produced). In particular, according to the invention, the molar ratio of natural gas consumed to hydrogen produced is lower than 0.335, as shown in example 1 in the following. Thereby, the consumed amount of natural gas does not necessarily refer to the hydrocarbon-containing feedstock exclusively, but may include further natural gas required as fuel, for example for the production of steam.

### Detailed description of exemplary embodiments

The invention will now be detailed by way of exemplary embodiments and examples with reference to the attached drawings. In the figures and the accompanying description, equivalent elements are each provided with the same reference marks.

In the drawings:
- Figure 1: depicts a block flow diagram of a process according to comparative example 4,
- Figure 2: depicts a block flow diagram of an embodiment of the process according to the invention,
- Figure 3: depicts a block flow diagram of an embodiment of the tail gas separation step of the process according to comparative example 4.

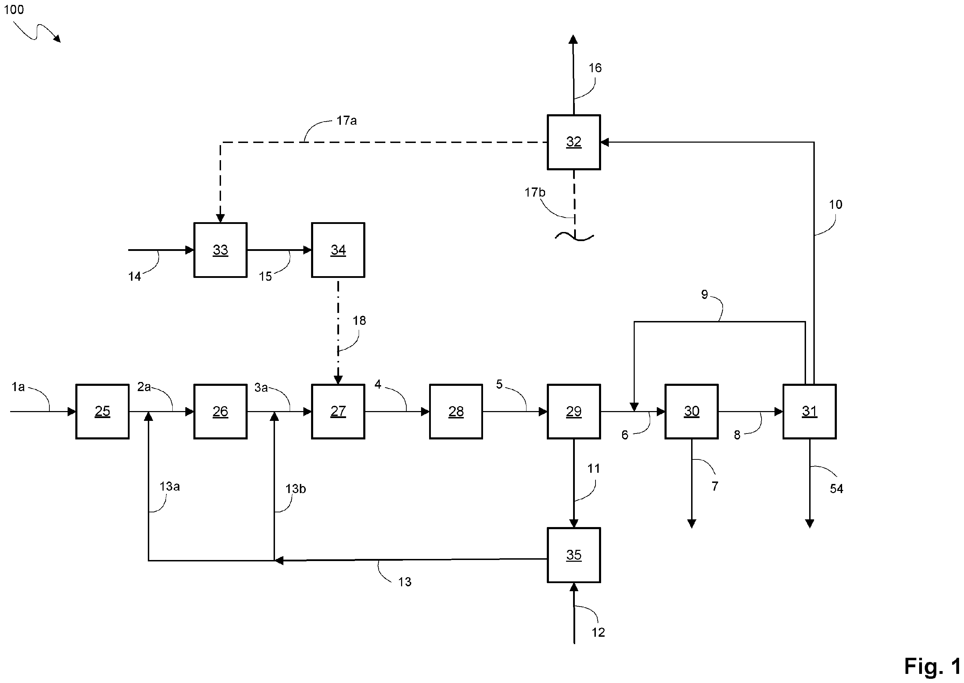

Figure 1 depicts a block flow diagram of a process 100 according to comparative example 4, wherein a combination of pressure swing adsorption and cryogenic separation is used to produce hydrogen and capture carbon dioxide. The tail gas produced in the pressure swing adsorption step contains mainly carbon dioxide, hydrogen, methane and carbon monoxide, and is subject to a tail gas separation step. The off-gas produced in the tail gas separation step is routed to a combustion device. The heat produced by the combustion device is utilized to produce steam, and the steam is further utilized to generate electrical energy by means of a steam turbine and a generator. The electrical energy is converted into heat for the endothermic reaction of the steam methane reforming (SMR) step.

A hydrocarbon containing feedstock stream, here a natural gas stream 1a, is desulfurized in a hydrodesulfurization unit 25 to afford a desulfurized natural gas stream. Said desulfurized natural gas stream is combined with steam stream 13a, which is a partial stream of steam stream 13. The resulting combined stream of desulfurized natural gas and steam 2a is converted in a pre-reformer 26 to afford a stream of desulfurized and pre-reformed natural gas, containing mainly methane as the hydrocarbon component. Said desulfurized and pre-reformed natural gas stream is combined with steam stream 13b, which is a partial stream of steam stream 13. The resulting combined stream of pre-reformed desulfurized natural gas and steam 3a is introduced into an electrically heated SMR unit 27, in the following referred to as e-SMR unit 27.

In the e-SMR unit 27, the desulfurized and pre-reformed natural gas stream is reformed with steam to afford a stream of synthesis gas 4. The reformer tubes (not shown) of the e-SMR unit 27 are heated by means of electrical energy, which is converted into heat. The synthesis gas stream 4 is introduced into a water-gas shift unit 28, in which carbon monoxide of the synthesis gas stream 4 is converted with steam into hydrogen and carbon dioxide, to afford a shifted synthesis gas stream 5. The shifted synthesis gas stream 5 contains mainly hydrogen and carbon dioxide, but also unconverted carbon monoxide and methane.

The shifted synthesis gas stream 5 is introduced into a cooling and separation unit 29, in which water contained in the shifted synthesis gas is condensed and withdrawn from the unit 29 as a water condensate stream 11. Said water condensate stream 11 is supplied to a boiler 35, which is also supplied with demineralized water via demineralized water stream 12. In the boiler 35, a steam stream 13 is produced, which is divided up into the steam partial streams 13a and 13b, to supply the pre-reformer unit 26 and the e-SMR unit 27 with steam.

An essentially water-free shifted synthesis gas stream is withdrawn from the cooling and separation unit 29, and a hydrogen rich stream 9 is combined with said stream to afford a hydrogen enriched shifted synthesis gas stream 6. This stream 6 is introduced into a hydrogen production unit, here a pressure swing adsorption (PSA) unit 30, in which a hydrogen product stream 7 and a tail gas stream 8 is produced. The hydrogen product stream 7 is optionally further purified and discharged from the process for further use.

The tail gas stream 8, which contains carbon dioxide, hydrogen, methane and carbon monoxide, is introduced into a tail gas separation unit 31, in which the tail gas stream is separated into a hydrogen rich stream 9, a carbon dioxide product stream 54, and an off-gas stream 10. How the hydrogen rich stream 9, the carbon dioxide product stream 54, and the off-gas stream 10 can be specifically obtained will be discussed further below in connection with Figure 4.

The hydrogen rich stream 9 produced in the tail gas separation unit 31 is completely recycled to the dry shifted synthesis gas stream discharged from the cooling and separation unit 29, to afford the hydrogen enriched shifted synthesis gas stream 6.

The off-gas stream 10 is fed in its entirety to a combustion device, here a fired heater 32, and burned with combustion air to generate heat. The heat generated in the fired heater 32 is utilized in the form of two heat streams 17a and 17b. That is, a part of the generated heat is utilized to close the heat balance of the process (stream 17b), and the remaining part is utilized to generate steam by means of a steam system 33. In the fired heater, a flue gas stream 16 is produced, which mainly comprises carbon dioxide and which is discharged from the fired heater. The steam system 33 is also supplied with demineralized water by means of a demineralized water stream 14. A steam stream 15 thereby produced in the steam system 33 is fed to a steam turbine and generator unit 34, in which electrical energy is produced in the form of an electrical current 18, which is used for generating heat in the e-SMR unit 27.

The electrical current 18 produced by the steam turbine and generator unit 34 reduces the amount of electrical power input required for the e-SMR unit. So the main benefit of this approach is the reduction of electricity demand from an external source. However, carbon dioxide emissions are not as much reduced as in the following examples of processes according to the invention.

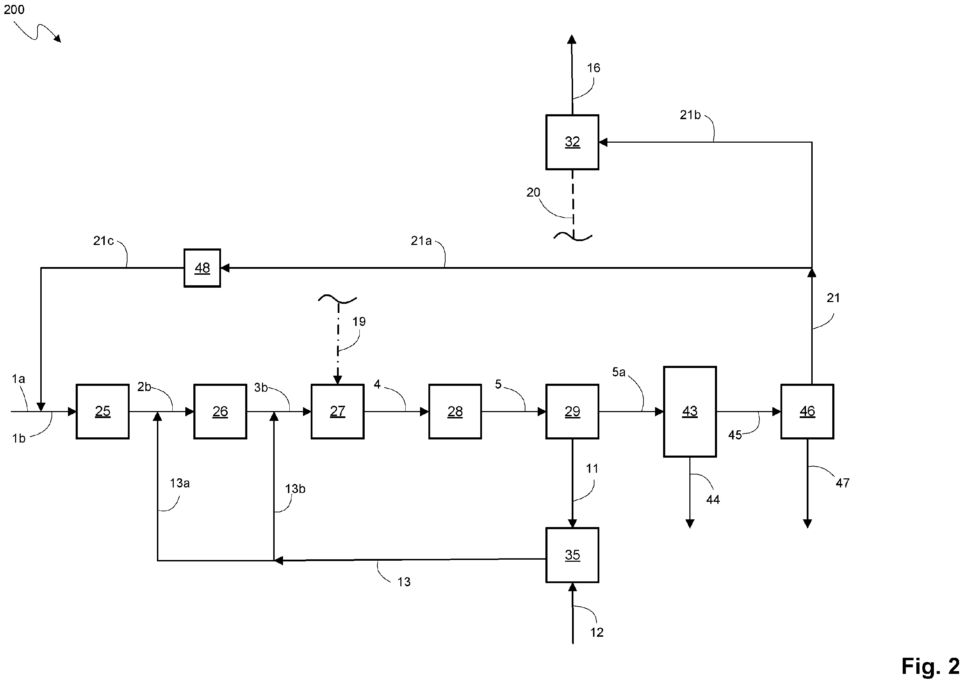

Figure 2 depicts a block flow diagram of a process 200 according to one example of the invention.

According to this example, shifted and essentially water-free synthesis gas is supplied to an amine wash unit to remove carbon dioxide from the gas mixture. The carbon dioxide depleted shifted synthesis gas, referred to as the hydrogen raw product stream, is routed to a pressure swing adsorption (PSA) unit, to afford a pure hydrogen product stream and an off-gas stream rich in carbon monoxide and methane. The major part of the off-gas stream is recycled to the hydrocarbon containing feedstock stream, here a natural gas stream, to afford a combined stream of hydrocarbon feedstock, steam and off-gas. Said combined stream is routed to the electrically heated SMR unit (e-SMR unit). The remaining portion of the off-gas stream is routed to a fired heater to generate heat, which is utilised to close the heat balance of the overall process.

Details of the process 200 are described as follows.

A hydrocarbon containing feedstock stream, here a natural gas stream 1a, is combined with a compressed off-gas partial stream 21c, whereby the off-gas partial stream 21c contains mainly carbon monoxide and methane. The combination of said streams afford a combined stream of natural gas and off-gas 1b, which is desulfurized in a hydrodesulfurization unit 25 to afford a desulfurized combined stream of natural gas and off-gas. Said stream is combined with steam stream 13a, which is a partial stream of steam stream 13. The resulting combined stream 2b of desulfurized natural gas, off-gas and steam is converted in a pre-reformer unit 26 to afford a combined stream of desulfurized and pre-reformed natural gas and off-gas, containing mainly methane as the hydrocarbon component. Said stream is combined with steam stream 13b, which is a partial stream of steam stream 13. The resulting combined stream 3b of pre-reformed desulfurized natural gas, off-gas and steam, is introduced into an electrically heated SMR unit 27, in the following referred to as e-SMR unit 27.

In the e-SMR unit 27, the desulfurized and pre-reformed natural gas and off-gas is reformed with steam to afford a stream of synthesis gas 4. The reformer tubes (not shown) of the e-SMR unit 27 are heated by means of electrical energy, which is converted into heat. Electrical energy is provided by means of an electric current 19, which comprises electricity from a renewable energy source. The synthesis gas stream 4 is introduced into a water-gas shift unit 28, in which carbon monoxide of the synthesis gas stream 4 is converted with steam into hydrogen and carbon dioxide, to afford a shifted synthesis gas stream 5. The shifted synthesis gas stream 5 contains mainly hydrogen and carbon dioxide, but also unconverted carbon monoxide and methane.

The shifted synthesis gas stream 5 is introduced into a cooling and separation unit 29, in which water contained in the shifted synthesis gas is condensed and withdrawn from the unit 29 as a water condensate stream 11. Said water condensate stream 11 is supplied to a boiler 35, which is also supplied with demineralized water via demineralized water stream 12. In the boiler 35, a steam stream 35 is produced, which is divided up into the steam partial streams 13a and 13b, to supply the pre-reformer unit 26 and the e-SMR unit 27 with steam.

An essentially water-free shifted synthesis gas stream 5a is withdrawn from the cooling and separation unit 29 and supplied to a chemical scrubbing unit 43. The chemical scrubbing unit 43 at least comprises an absorption column (not shown) and a regenerator (not shown). In the absorption column, carbon dioxide of the dry shifted synthesis gas stream 5a is chemically absorbed (acid-base interaction) by an aqueous solution of activated methyldiethanolamine (aMDEA). A carbon dioxide depleted stream of shifted synthesis gas, referred to as hydrogen raw product stream 45, is withdrawn from the absorption column of the chemical scrubbing unit 43 accordingly. The laden aMDEA solution, i.e. the rich amine solution, is routed to the regenerator of the chemical scrubbing unit. The regenerator of the chemical scrubbing unit 43 comprises a reboiler (not shown), through which the rich amine solution is circulated, and which is heated with steam. The steam required for the reboiler is produced by the evaporation of boiler feed water, with the thermal energy required for evaporation being provided internally in the process. Through circulation of the rich amine solution through the reboiler, carbon dioxide is desorbed from the rich amine solution, thereby providing a lean amine solution and a carbon dioxide product stream 44. The carbon dioxide product stream 44 is withdrawn from the regenerator of the chemical scrubbing unit 43. The resulting lean aqueous amine solution (aMDEA solution) is discharged from the regenerator and routed back to the absorption column of the chemical scrubbing unit 43. The carbon dioxide stream 44 may be subject to further purification and subsequent compression and sequestration. The carbon dioxide depleted shifted synthesis gas stream contains mainly hydrogen as the target product, and carbon monoxide not converted in the shift step, and methane not converted in the steam methane reforming (SMR) step. This stream 45, referred to as hydrogen raw product stream, is routed to a hydrogen production unit 46, here a pressure swing adsorption unit. In the pressure swing adsorption unit 46, hydrogen is separated from the hydrogen raw product stream to afford a pure hydrogen product stream 47. Said pure hydrogen stream 47, depending on the specification requirements, may be subject to further purification and is discharged from the process for further use.

The pressure swing adsorption step in the hydrogen production unit 46 also affords a tail gas stream, which is referred to as the off-gas stream 21 of the hydrogen production step. Said off-gas stream contains carbon monoxide and methane as the main components, and possibly residual amounts of hydrogen not separated from the hydrogen raw product stream 45 in the hydrogen production unit 46.

The off-gas stream 21 is split up into an off-gas partial stream 21a and an off-gas partial stream 21b.

About 60 % of the volume flow of the off-gas stream 21 is routed as off-gas partial stream 21a to a compressor 48, to afford a compressed off-gas partial stream 21c. Said compressed stream 21c is recycled to the natural gas stream 1a to afford the combined stream of natural gas and off-gas 1b.

About 40 % of the volume flow of the off-gas stream 21 is fed as off-gas partial stream 21b to a combustion device, here a fired heater 32, and burned with combustion air to generate heat. The heat generated in the fired heater 32 is utilized in the form a heat stream 20, which is utilized to close the heat balance of the process. Closing the heat balance of the process may involve pre-heating one or several of the streams 1b, 2b, 3b or 4, or generating process steam for the e-SMR unit 27. In particular, according to this example, the heat stream 20 is utilised for the generation of steam, which is in turn utilised in the reboiler of the regenerator of the chemical scrubbing unit 43 for the desorption of carbon dioxide from the rich amine solution. The combustion device 32 also produces a hot flue gas stream 16. The heat stream 20 is derived from the hot flue gas stream 16.

The material and heat integration according to the example represented by Figure 2 provides a significant reduction of the natural gas feed flow 1a compared to comparative example 4 represented by Figure 1. Furthermore, it leads to significantly lower direct carbon dioxide emissions, since the amount of fuel sent to the combustion device, i.e. the fired heater 32, is significantly reduced compared to the combustion of PSA tail gas in the conventional SMR setup (comparative example 3), or compared to the combustion of the off-gas stream 10 according to the setup of Figure 1 (comparative example 4).

This is exemplified in the table below, which data is based on simulation results. The electrically heated SMR is referred to as "e-SMR".

| | e-SMR (with carbon capture) **comparative example 4** (Figure 1) | e-SMR (with carbon capture and off-gas recycle) **example** (Figure 2) |
|---|---|---|
| Natural gas consumption (Nm³/Nm³ H₂) | 0.335 | 0.284 |
| Direct CO₂ emissions (kg/Nm³ H₂) | 0.250 | 0.099 |
| Electrical power (kWh/Nm³ H₂) | 0.862 | 1.152 |
| Indirect CO₂ emissions¹ EU 27 basis (kgCO₂eq/Nm³ H₂) | 0.226 | 0.302 |
| Total CO₂ emissions (direct + indirect EU 27 basis) (kg/Nm³ H₂) | 0.476 | 0.401 |
| Total NG LHV² + electric energy input (kWh/Nm³ H₂) | 4.340 | 4.101 |

| | | |
|---|---|---|
| ¹Carbon intensity of electricity: 262 gCO₂eq/kWh in EU27 in 2021 ²LHV (lower heating value) of Natural Gas: 46.5 MJ/kg | | |

With regard to the demand for electrical energy, it has to be taken into account that if electrical energy from a renewable energy source is used, no indirect carbon dioxide emissions are linked to such an electrical energy source.

For the case that there are indirect emissions linked to the generation of electricity, however, the total direct and indirect emissions have been decreased considerably according to the example, and are now lower than those of a conventional SMR with carbon capture (comparative example 3) and lower than those of the setup of comparative example 4. Similarly the total energy input has now decreased relative to comparative example 3 and comparative example 4.

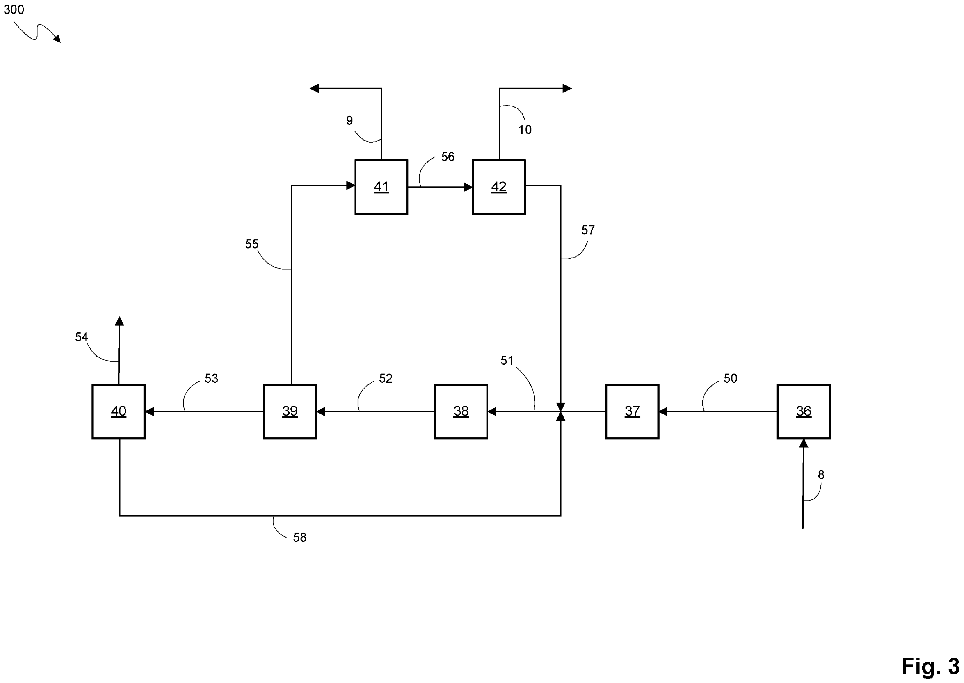

Figure 3 depicts a block flow diagram of a process 300, which represents a partial process of the process according to comparative example 4, and which represents an example of the tail gas separation step of the process according to comparative example 4.

The tail gas stream 8 is fed to a first compressor stage 36, where it is compressed to medium pressure, for instance a pressure of 5 to 20 bar. The resulting compressed tail gas stream 50 is fed to a dryer unit 37, in which any trace of water is removed completely, in order to prevent water from solidifying in downstream steps of the process. The dried tail stream thereby obtained is fed to a second compressor stage 38, in which the dried tail gas stream is further compressed to a higher pressure.

The resulting dried and compressed tail gas stream 52 is fed to a cooling and separation unit 39, in which the tail gas is cooled down to enable condensation of carbon dioxide and separation of the same from the non-condensable gas constituents. A liquid carbon dioxide stream 53 thereby obtained is fed to a cryogenic distillation unit 40, in which pure carbon dioxide is obtained as a bottom product. Said bottom product, which contains carbon dioxide at the desired purity, is discharged from the cryogenic distillation unit 40 as the carbon dioxide product stream 54. The top distillate from the unit 40, the distillation column overhead product stream 58, is recycled to the second compressor stage 38.

A stream of non-condensable gas constituents 55, discharged from the cooling and separation unit 39, is fed to a first membrane unit 41, from which the hydrogen rich stream 9 is obtained as the permeate stream, and a retentate stream 56, which contains mostly carbon monoxide, methane and remaining carbon dioxide. The retentate stream 56 of the first membrane unit 41 is fed to a second membrane unit 42, where most of the remaining carbon dioxide is released as a permeate stream 57, which is recycled back to the second compressor stage 38. The retentate of the second membrane unit 42 consists of mostly carbon monoxide and methane, which is discharged from the second membrane unit 42 as the off-gas stream 10.

### List of reference signs

- 100: process (comparative example 4)
- 200: process (example)
- 300: sub-process (tail gas separation)
- 1a: natural gas stream
- 1b: combined stream of natural gas and off-gas
- 2a: combined stream of desulfurized natural gas and steam
- 2b: combined stream of desulfurized natural gas, steam, and off-gas
- 3a: combined stream of pre-reformed desulfurized natural gas and steam
- 3b: combined stream of pre-reformed desulfurized natural gas, steam and off-gas
- 4: synthesis gas stream
- 5: shifted synthesis gas stream
- 5a: dry shifted synthesis gas stream
- 6: hydrogen enriched shifted synthesis gas stream
- 7: hydrogen product stream
- 8: tail gas stream
- 9: hydrogen rich stream
- 10: off-gas stream
- 11: water condensate stream
- 12: demineralized water stream
- 13: steam stream
- 13a, 13b: steam partial stream
- 14: demineralized water stream
- 15: steam stream
- 16: flue gas stream
- 17a, 17b: heat stream
- 18: electric current
- 19: electric current
- 20: heat stream
- 21: off-gas stream
- 21a, 21b: off-gas partial stream
- 21c: compressed off-gas partial stream
- 25: hydrodesulfurization (HDS) unit
- 26: pre-reformer
- 27: electrically heated SMR (e-SMR) unit
- 28: water-gas shift unit
- 29: cooling and separation unit
- 30: pressure swing adsorption (PSA) unit (hydrogen production unit)
- 31: tail gas separation unit
- 32: fired heater (combustion device)
- 33: steam system
- 34: steam turbine and generator
- 35: boiler
- 36: first compressor stage (medium pressure)
- 37: dryer unit
- 38: second compressor stage (high pressure)
- 39: cooling and separation unit
- 40: cryogenic distillation unit
- 41: first membrane unit
- 42: second membrane unit
- 43: chemical scrubbing unit
- 44: carbon dioxide product stream
- 45: hydrogen raw product stream
- 46: pressure swing adsorption unit (hydrogen production unit)
- 47: hydrogen product stream
- 48: compressor
- 50: compressed tail gas stream (medium pressure)
- 51: dried tail gas stream
- 52: compressed dried tail gas stream (high pressure)
- 53: liquid carbon dioxide stream
- 54: carbon dioxide product stream
- 55: stream of non condensables
- 56: retentate stream of first membrane unit
- 57: permeate stream of second membrane unit
- 58: distillation column overhead product stream

## Claims

1. A process (200) for producing hydrogen, the process comprising
a) a steam methane reforming (SMR) step, to obtain a synthesis gas stream (4) comprising hydrogen, carbon monoxide and carbon dioxide, by means of an endothermic reaction of a hydrocarbon containing feedstock stream (1a, 1b) and steam, wherein the heat for the endothermic reaction is at least partially provided by converting electrical energy into heat;
b) a water-gas shift step, comprising the conversion of carbon monoxide of the synthesis gas stream and steam to hydrogen and carbon dioxide, to obtain a shifted synthesis gas stream (5);
c) a chemical scrubbing step, comprising the absorption of carbon dioxide in a chemical scrubbing agent, and the desorption of the carbon dioxide from the chemical scrubbing agent, to obtain a carbon dioxide product stream (44) and a hydrogen raw product stream (45), wherein the hydrogen raw product stream comprises hydrogen, carbon monoxide and methane;
d) a hydrogen production step, comprising separating hydrogen from the hydrogen raw product stream, to obtain a hydrogen product stream (47) and an off-gas stream (21), wherein the off-gas stream is rich in carbon monoxide and methane; and
e) recycling at least a portion (21a, 21c) of the off-gas stream obtained in the hydrogen production step to the hydrocarbon containing feedstock stream, so that a combined stream of hydrocarbon containing feedstock, off-gas and steam is supplied to the steam methane reforming (SMR) step.

2. Process according to claim 1, wherein a portion (21b) of the off-gas stream is routed to a combustion device (32), in particular a fired heater, wherein the combustion device is configured to generate heat.

3. Process according to claim 2, wherein the portion of the off-gas stream in the total off-gas stream is 30 % to 50 % by volume, preferably 35 % to 45 % by volume.

4. Process according to claim 2 or 3, wherein the heat generated by the combustion device is used to close the heat balance of the process, which comprises at least one element from
- pre-heating the hydrocarbon containing feedstock stream before it enters the steam methane reforming (SMR) step,
- providing heat for the endothermic reaction in the steam methane reforming (SMR) step,
- pre-heating boiler feed water for the generation of steam,
- generating process steam for the steam methane reforming (SMR) step or the water-gas shift step, and
- super-heating steam generated in the process.

5. Process according to any one of claims 2 to 4, wherein the heat generated by the combustion device is indirectly utilised for the desorption of carbon dioxide from the chemical scrubbing agent.

6. Process according to any one of the preceding claims, wherein the converting of electrical energy into heat comprises at least one element from
- resistive heating,
- electro-reforming,
- inductive heating, and
- microwave heating.

7. Process according to any one of the preceding claims, wherein the hydrocarbon of the hydrocarbon containing feedstock stream is natural gas, and wherein a molar ratio of natural gas consumed to hydrogen produced is 0.33 or less, preferably 0.29 or less.
